# EUROPÄISCHE PATENTANMELDUNG

(11) **EP 0 642 201 A1**
(43) Veröffentlichungstag der Anmeldung: **08.03.1995**
(21) Anmeldenummer: 94113222.7
(22) Anmeldetag: 24.08.1994
(51) Int. Cl.: H02J 3/36

(54) **Hochspannungs-Gleichstrom-Übertragungsanlage**

(30) Priorität: 06.09.1993 DE 4330116
(71) Anmelder: SIEMENS AKTIENGESELLSCHAFT, D-80333 München (DE)
(72) Erfinder: Christl, Norbert, Dipl.-Ing., D-91074 Herzogenaurach (DE); Sadek, Kadry, Dr., D-91056 Erlangen (DE); Huang, Hartmut, Dr., D-90427 Herzogenaurach (DE)

(57) **Zusammenfassung**

Die Erfindung bezieht sich auf eine Hochspannungs-Gleichstrom-Übertragungs-Anlage (2) zur Kopplung zweier Netze (4, 6), die sehr unterschiedliche Frequenzen (f2 und f1) und Anzahl von Phasen haben. Erfindungsgemäß ist im Gleichstrom-Zwischenkreis (12) ein Sperrkreis (26) für charakteristische Oberschwingungsströme relativ kleiner Ordnung angeordnet. Somit kann die Wechselwirkung zwischen den beiden Netzen (4, 6) erheblich reduziert werden.

## Beschreibung

Die Erfindung bezieht sich auf eine Hochspannungs-Gleichstrom-Übertragungs-Anlage zur Kopplung zweier Netze, die sehr unterschiedliche Frequenzen und Anzahl von Phasen haben.

Hochspannungs-Gleichstrom-Übertragungs-Anlagen werden benutzt, um elektrische Leistung zwischen Verbundnetzen auszutauschen, wodurch sich die Versorgungssicherheit in den einzelnen Verbundnetzen verbessert. Außerdem erlaubt eine Hochspannungs-Gleichstrom-Übertragungs-(HGÜ-)Kurzkupplung auch Gleichstrom-Netzkupplung (GNK) genannt wichtige und kostengünstige Stromgeschäfte im normalen Austausch und hat zumindest aufschiebende Wirkung auf den Zubau notwendiger zusätzlicher Kraftwerksleistung.

Aus der Zeitschrift "ELEKTRIE", Berlin, 45(1991) 3, Seiten 94 bis 96, ist ein Prinzipschaltbild einer HGÜ-Kurzkupplung bekannt. In diesem Aufsatz sind Einzelheiten - Funktionsweise und Aufbau, Leittechnik, Steuerung, Regelung und Schutz- und Meldesystem - näher dargestellt. Die an den Sammelschienen der Netze angeordneten Drehstromfilterkreise haben die Aufgabe, die durch die Stromrichter entstehenden Oberschwingungen (charakteristische) abzusaugen und die benötigte kapazitive Blindleistung zur Kompensation der induktiven Stromrichter-Blindleistung zu erzeugen. Abhängig von der Blindleistungsbilanz im Netz und im Arbeitspunkt der HGÜ-Anlage werden die Filterkreise von der Steuerung zu- bzw. abgeschaltet.

Mit dem zunehmenden Begriff der Energiequalität wird in elektrischen Energieversorgungsnetzen vermehrt auf die Reduktion von Harmonischen geachtet, da durch Auftreten von Harmonischen die Elektroenergiequalität sich vermindern kann.

Aufgrund von Unsymmetrien der Betriebsmittelimpedanzen, der Netzspannung sowie der Unsymmetrie der Steuerwinkel der Gleich- und Wechselrichter der HGÜ-Anlage kommt es neben den charakteristischen Stromrichterharmonischen auch zum Auftreten nichtcharakteristischer Harmonischer.

Gemäß dem Aufsatz "Harmonische in Drehstromnetzen bei Betrieb einer HGÜ-Kurzkupplung" von E.Bauer und G.Winkler, abgedruckt in der Zeitschrift "ELECTRIE", Berlin, 45(1991) 3, Seiten 97 bis 100, zeigt sich, daß die Amplituden der einzelnen nichtcharakteristischen Stromharmonischen wesentlich geringer als die der charakteristischen Stromharmonischen sind. Bei Projektierung von HGÜ-Anlagen ist besonders die Höhe der nichtcharakteristischen Harmonischen zu beachten, die unter der niedrigsten Abstimmfrequenz der Filter liegen, da die Filter für diese Harmonischen kapazitiv wirken, und mit der Netzimpedanz einen Schwingkreis bilden. Hat dieser Schwingkreis eine parallele Resonanzstelle im Bereich der nichtcharakteristischen Harmonischen, so wird er von dieser angeregt und es können unerwartet hohe Spannungsharmonische im Netz auftreten. Im Falle der Anregung sollte gemäß diesem Aufsatz auch für diese niedrigsten Harmonischen ein Filter vorgesehen sein, der zweckmäßigerweise auf die tiefste nichtcharakteristische - die dritte -Harmonische abgestimmt sein sollte.

Im Aufsatz "Drehstromfilterkreise für Hochspannungs-Gleichstrom-Übertragungs-Stationen", abgedruckt in der Zeitschrift Siemens-Energietechnik, Band 6, 1984, Heft 3, Seiten 130 bis 134, werden verschiedene Filterkreisanordnungen vorgestellt. Außerdem werden ausgeführte Filterkreisanlagen vorgestellt. Bei der Filterkreisanlage Châteauguay in Kanada wurden wegen der gegebenenfalls auftretenden nichtcharakteristischen Oberschwingungen der 3. und 5. Ordnungszahl Doppelfilter eingesetzt, wogegen im Bereich der charakteristischen Oberschwingungen die Anlage jedoch aus den abgestimmten Filterkreisen für die 11. und 13. Oberschwingung sowie einem Hochpaß besteht.

Eine Hochspannungs-Gleichstrom-Übertragungs-Anlage kann ebenfalls zur Kupplung zweier Stromnetze mit sehr unterschiedlichen Frequenzen und verschiedener Anzahl von Phasen verwendet werden. Ein Beispiel ist die Vorbindung eines 50 Hz-Drehstromnetzes mit dem einphasigen Bahnnetz der Frequenz von 16 2/3 Hz. Fur das einphasige Netz ist die zweipulsige Brückenschaltung die standardmäßige Schaltung des Stromrichters. Aufgrund der kleineren Pulszahl und/oder der niedrigen Frequenz des angeschlossenen Netzes treten Oberschwingungsströme relativ kleiner Ordnung im Gleichstromzwischenkreis auf. Da die Amplitude von charakteristischen Oberschwingungsspannungen und -strömen mit abnehmender Ordnungszahl ansteigt, lassen sich die Niederfrequenzen Oberschwingungsströme nur mit einer sehr großen (unwirtschaftlichen) Glättungsdrossel im Gleichstromzwischenkreis unterdrücken. Die niederfrequenten Oberschwingungsströme, die wegen der unzureichenden Glättung im Gleichstromzwischenkreis in das angeschlossene Drehstromnetz übertragen werden, lassen sich nur mit aufwendigen Filterkreisen effektiv eliminieren. Das Problem verschärft sich, wenn die Frequenz des Netzes größer ist als die Frequenzen der übertragenen Oberschwingungen des anderen Netzes. Ein üblicher Shunt-Filter, der auf diese niederfrequenten Oberschwingungen abgestimmt ist, besitzt dann bei Netzfrequenz ein induktives Verhalten. Das angeschlossene Netz wird somit neben dem Stromrichter noch zusätzlich durch den Filter induktiv belastet. Dies erfordert zusätzliche Blindleistungskompensationseinrichtungen.

Der Erfindung liegt nun die Aufgabe zugrunde, eine Hochspannungs-Gleichstrom-Übertragungs-Anlage zur Kopplung zweier Netze mit sehr unterschiedlichen Frequenzen und verschiedener Anzahl von Phasen anzugeben, wobei auftretende starke Wechselwirkungen durch der niederfrequenten Oberschwingung unterdrückt werden.

Diese Aufgabe wird erfindungsgemäß dadurch gelost, daß im Gleichstromzwischenkreis ein Sperrkreis für charakteristische Oberschwingungsströme relativ kleiner Ordnung angeordnet ist. Durch das Anbringen eines Sperrkreises für die niedrigeren charakteristischen Oberschwingungen im Gleichstromzwischenkreis kann die Wechselwirkung zwischen beiden Netzen erheblich reduziert werden. Somit kann der Anteil der in das angeschlossene Drehstromnetz übertragenen niederfrequenten Oberschwingungsströme soweit reduziert werden, daß zusätzliche Filterkreise auf der Drehstromseite für diese niederfrequenten Harmonischen nicht mehr nötig sind. Außerdem ist der Sperrkreis im Gleichstromzwischenkreis viel preisgünstiger und effektiver als äquivalente Filterkreise im Drehstromsystem, da die Spannungspegel im Gleichstromkreis üblicherweise viel niedriger sind im Gegensatz zum angeschlossenen Stromnetz.

Bei einer besonders vorteilhaften Ausführungsform der erfindungsgemäßen HGÜ-Anlage ist im Gleichstromzwischenkreis zusätzlich zum Sperrkreis ein paralleler Filterkreis angeordnet, der auf die nächsten charakteristischen Oberschwingungen im Gleichstromkreis abgestimmt ist. Die charakteristischen Oberschwingungen mit niedriger Ordnungszahl und großer Amplitude werden mittels des Sperrkreises und die nachfolgenden charakteristischen Oberschwingungen kleiner Amplitude werden mittels des zusätzlichen Filterkeises unterdrückt. Somit erhält man eine besonders preisgünstige Anordnung, die die charakteristischen Oberschwingungen niedriger Frequenz unterdrücken, so daß die Wechselwirkung zwischen zwei Netzen sehr unterschiedlicher Frequenzen und unterschiedlicher Anzahl der Phasen erheblich reduziert wird.

Vorteilhafte Ausgestaltungen des Sperrkreises und des Filterkreises sind den abhängigen Ansprüchen 3 bis 5 zu entnehmen.

Zur weiteren Erläuterung der Erfindung wird auf die Zeichnung Bezug genommen, in der eine Ausführungsform der Vorrichtung zur Durchführung des erfindungsgemäßen Verfahrens schematisch veranschaulicht wird.
- Fig. 1: zeigt ein Prinzipbild der erfindungsgemäßen HGÜ-Anlage und in
- Fig. 2: ist ein Ausführungsbeispiel der Erfindung dargestellt.

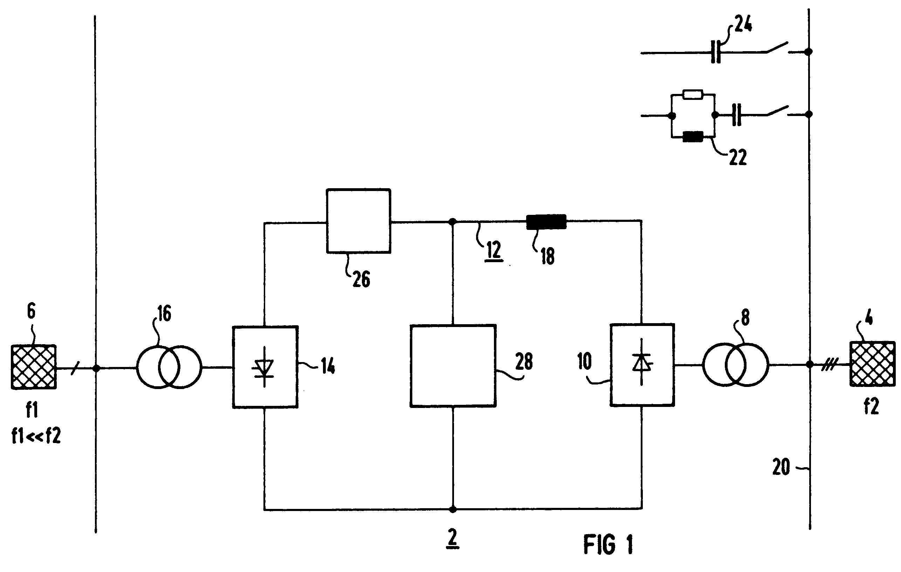

Die Fig. 1 zeigt ein Prinzipbild einer erfindungsgemäßen HGÜ-Anlage 2, auch als HGÜ-Kurzkupplung genannt, die das Netz 4 mit dem Netz 6 derart kuppelt, daß elektrische Energie in diesen Netzen 4 und 6 ausgetauscht werden kann. Die HGÜ-Kurzkupplung 2 sollte den Energieaustauch zwischen diesen beiden Netzen 4 und 6 mit möglichst geringer Wechselwirkung realisieren.

Das allgemeine Funktionsprinzip einer HGÜ-Kurzkupplung 2 beruht darauf, daß bei zwei zu koppelnden Netzen 4 und 6 Strom und Spannungen vom Netz 4 über einen Stromrichtertransformator 8 auf eine Gleichrichterstation 10 geführt und dort in Gleichspannung bzw. Gleichstrom umgewandelt werden. Diese Gleichrichterstation 10 ist über einen Gleichstrom-Zwischenkreis 12 mit einer weiteren Station 14 verbunden, die als Wechselrichter betrieben wird. Diese Wechselrichterstation 14 wandelt die Gleichgrößen wieder zurück in Wechselspannung bzw. Wechselstrom. Über einen weiteren Stromrichtertransformator 16 werden diese Wechselgrößen dann an das Netz 6 geliefert.

Der Gleich- bzw. Wechselrichter 10 bzw. 14 arbeitet bekanntlich durch gesteuertes Schalten der Ventile nach dem Prinzip des Phasenanschnitts. Dies hat Oberschwingungen mit einem Vielfachen der Frequenz des angeschlossenen Netzes im Gleichstromkreis zur Folge. Diese Harmonischen können über die jeweilige Gegenstation 14 bzw. 10 der HGÜ-Kurzkupplung 2 in das jeweils angeschlossene Netz 6 bzw. 4 übertragen werden. Diese Wechselwirkungen zwischen den beiden Netzen 4 und 6 sind hinsichtlich einer hohen Energiequalität des elektrischen Versorgungsnetzes 4 besonders unerwünscht.

Im Gleichstrom-Zwischenkreis 12 befindet sich eine Glättungsdrossel 18, die auf das Betriebsverhalten der HGÜ-Kurzkupplung 2 einen wesentlichen Einfluß hat. Sie dient einerseits der Glättung des Gleichstromes sowie andererseits der Überstrombegrenzung im Falle von Störungen. Daneben ist mit einer richtig dimensionierten Glättungsdrossel 18 auch eine bessere Entkopplung der beiden Netze 4 und 6 verbunden, weil durch die Drossel 18 im stationären Betrieb gegenseitige Netzbeeinflussungen weitgehend verhindert werden. Daraus resultiert zusätzlich eine größere Stabilität der HGÜ-Regelung.

An der Sammelschiene 20 sind eine Drehstromfilterkreisanlage 22 und eine Kondensatorbatterie 24 angeschlossen. Von der Drehstromfilterkreisanlage 22 ist aus Übersichtlichkeitsgründen nur ein Filterkreis näher dargestellt. Die Filterkreisanlage 22 saugt die Oberschwingungen ab, die durch die Stromrichter 10 und 14 entstehen und mittels der Kondensatorbatterie 24 wird die nötige kapazitive Blindleistung zur Kompensation der induktiven Stromrichter-Blindleistung erzeugt. Abhängig von der Blindleistungsbilanz im Netz 4 und dem Arbeitspunkt der HGÜ-Kurzkupplung 2 werden die Filterkreise der Filterkreisanlage 22 zu- bzw. abgeschaltet.

Solange die beiden angeschlossenen Netze 4 und 6 Drehstromsysteme sind und ihre Frequenzen nicht stark voneinander abweichen, erzeugen die entsprechenden Brückenschaltungen der Stromrichterstationen 10 und 14 nur Oberschwingungen als Vielfaches der Netzfrequenz (typische Werte: 6 oder 12fach) im Gleichstrom-Zwischenkreis 12. Wegen ihrer hohen Ordnung können diese Oberschwingungen durch eine angemessene Glättungsdrossel im Gleichstromzwischenkreis weitgehend unterdruckt werden.

Dieses Prinzip der HGÜ-Kurzkupplung 2 kann ebenfalls zur Kupplung zweier Stromnetze 4 und 6 mit sehr unterschiedlichen Frequenzen f2 und f1 und verschiedener Anzahl von Phasen verwendet werden. Ein Beispiel ist die Verbindung des 50 Hz-Drehstromnetzes 4 mit dem einphasigen Bahnnetz 6 der Frequenz von 16 2/3 Hz. Für das einphasige Netz ist eine Stromrichterschaltung 14 mit kleiner Pulszahl notwendig. Aufgrund der kleineren Pulszahl und/oder der niedrigeren Frequenz des angeschlossenen Netzes 6 treten Oberschwingungsströme relativ kleiner Ordnung im Gleichstrom-Zwischenkreis 12 auf. Da die Amplitude von charakteristischen Oberschwingungsspannungen und -strömen abnehmender Ordnungszahl ansteigt, lassen sich diese niederfrequenten Oberschwingungsströme nur mit einer sehr großen (unwirtschaftlichen) Glättungsdrossel im Gleichstromzwischenkreis unterdrücken. Die niederfrequenten Oberschwingungsströme, die wegen der unzureichenden Glättung im Gleichstrom-Zwischenkreis 12 in das angeschlossene Drehstromnetz 4 übertragen werden, lassen sich nur mit aufwendigen Filterkreises effektiv eliminieren. Das Problem verschärft sich, wenn die Frequenz f2 des Netzes 4 größer ist als die Frequenzen der übertragenen Oberschwingungen des anderen Netzes 6. Ein üblicher Shunt-Filter, der auf diese niederfrequenten Oberschwingungen abgestimmt ist, besitzt dann bei Netzfrequenz f2 ein induktives Verhalten. Das angeschlossene Netz 4 wird somit neben dem Stromrichter 10 noch zusätzlich durch den Filter induktiv belastet. Dies erfordert zusätzliche Blindleistungskompensationseinrichtungen.

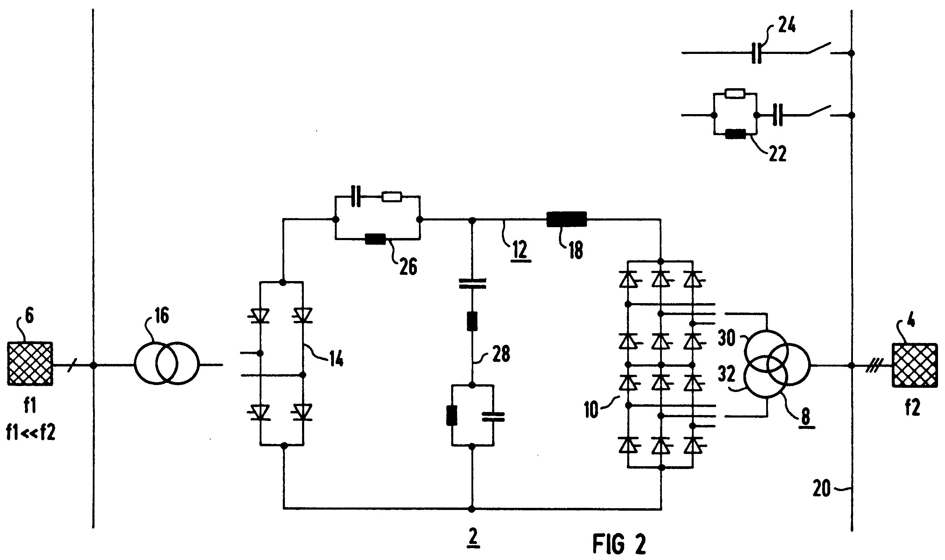

Um diese charakteristischen Oberschwingungsströmen zu eliminieren, ist die erfindungsgemäße HGÜ-Kurzkupplung 2 mit einem Sperrkreis 26 versehen. Dieser Sperrkreis 26 ist im Gleichstrom-Zwischenkreis 12 angeordnet. Zusätzlich zum Sperrkreis 26 kann noch ein paralleler Filterkreis 28 im Gleichstrom-Zwischenkreis 12 angeordnet werden. Der Sperrkreis 26 ist auf die niedrigste, der zusätzliche parallele Filterkreis 28 ist auf die nächsten Oberschwingungen im Gleichstromkreis 12 abgestimmt. In Fig. 2 ist ein Ausführungsbeispiel dieser erfindungsgemäßen HGÜ-Kurzkupplung 2 im einzelnen dargestellt.

Dieser Darstellung kann entnommen werden, daß die Gleichrichterstation 10 einen 12pulsigen-Stromrichter aufweist, der über den Stromrichtertransformator 8 an das Drehstromnetz 4 angeschlossen ist. Der Stromrichtertransformator 8 weist zwei Sekundärwicklungen 30 und 32 auf. Die Wechselrichterstation 14 weist eine zweipulsige Brückenschaltung auf, die ausgangsseitig über den Stromrichtertransformator 16 mit dem einphasigen Netz 6 verbunden ist. Die Frequenz f1 des einphasigen Netzes 6 beträgt beispielsweise 16 2/3 Hz und ist somit viel kleiner als die Frequenz f2 (50 Hz) des Drehstromnetzes 4. Die Gleichspannung der zweipulsigen Brückenschaltung der Wechselrichterstation 14 enthält eine Reihe geradzahliger charakteristischer Oberschwingungen der Ordnungszahlen 2, 4, 6, ... mit hohen Amplituden. Diese charakteristischen Oberschwingungen wurden ohne den im Gleichstrom-Zwischenkreis 12 angeordneten Sperrkreis 26 ins Drehstromnetz 4 übertragen werden. Der Sperrkreis 26 kann beispielsweise ein oder mehrere in Reihe geschaltete Parallelresonanzkreise beinhalten, die auf die niedrigsten charakteristischen Oberschwingungen abgestimmt sind. Der zusätzlich zum Sperrkreis 26 angebrachte parallele Filterkreis 28 ist auf die nächsten Oberschwingungen im Gleichstrom-Zwischenkreis 12 abgestimmt. Der parallele Filterkreis 28 kann sowohl ein einfacher Reihenresonanzkreis als auch ein mehrfach abgestimmter Filterkreis sein. Die standardmäßige Glättungsdrossel 18 dient wie üblich zur Glättung der höheren Oberschwingungen im Gleichstrom-Zwischenkreis 12.

Durch das Anbringen des Sperrkreises 26 mit oder ohne zusätzlichen parallelen Filterkreis 28 für die niedrigeren charakteristischen Oberschwingungen im Gleichstrom-Zwischenkreis 12 kann die Wechselwirkung zwischen beiden Netzen 4 und 6 erheblich reduziert werden. Somit kann der Anteil der in das angeschlossene Drehstromnetz 4 übertragenen niederfrequenten Oberschwingungsströme so weit reduziert werden, daß zusätzliche Filterkreise auf der Drehstromseite für diese niederfrequenten Harmonischen nicht mehr nötig sind.

Die Sperr- und Filterkreise 26 und 28 im Gleichstrom-Zwischenkreis 12 sind viel preisgünstiger und effektiver als äquivalente Filterkreise im Drehstromsystem 4, da die Spannungspegel im Gleichstrom-Zwischenkreis 12 viel niedriger sind im Gegensatz zum angeschlossenen Stromnetz 4.

Mittels einer derartigen HGÜ-Kurzkupplung 2 kann elektrische Energie zwischen zwei Versorgungsnetzen 4 und 6 ausgetauscht werden, die sowohl verschiedene Frequenzen f2 und f1 als auch unterschiedliche Anzahl von Phasen besitzen, wobei die Wechselwirkung zwischen diesen beiden Netzen 4 und 6 erheblich reduziert werden, wodurch die Qualität des elektrischen Versorgungsnetzes 4 nicht beeinträchtigt wird.

## Patentansprüche

1. Hochspannungs-Gleichstrom-Übertragungs-Anlage (2) zur Kopplung zweier Netze (4, 6), die sehr unterschiedliche Frequenzen (f2, f1) und unterschiedliche Anzahl von Phasen haben, wobei im Gleichstrom-Zwischenkreis (12) ein Sperrkreis (26) für charakteristische Oberschwingungsströme relativ kleiner Ordnung angeordnet ist.

2. Hochspannungs-Gleichstrom-Übertragungs-Anlage (2) nach Anspruch 1, wobei im Gleichstrom-Zwischenkreis (12) ein paralleler Filterkreis (28) angeordnet ist.

3. Hochspannungs-Gleichstrom-Übertragungs-Anlage (2) nach Anspruch 1, wobei als Sperrkreis (26) wenigstens ein Parallelresonanzkreis vorgesehen ist.

4. Hochspannungs-Gleichstrom-Übertragungs-Anlage (2) nach Anspruch 2, wobei als paralleler Filterkreis (28) ein Reihenresonanzkreis vorgesehen ist.

5. Hochspannungs-Gleichstrom-Übertragungs-Anlage (2) nach Anspruch 2, wobei als paralleler Filterkreis (28) ein mehrfach abgestimmter Filterkreis vorgesehen ist.
